(19) **Europäisches Patentamt**
**European Patent Office**
**Office européen des brevets**

(11) **EP 2 111 605 B1**

(12) **FASCICULE DE BREVET EUROPEEN**

(45) Date de publication et mention de la délivrance du brevet:
**20.06.2018 Bulletin 2018/25**

(51) Int Cl.:
***G06T 7/20*** *(2017.01)*

(21) Numéro de dépôt: **08761787.4**

(22) Date de dépôt: **18.01.2008**

(86) Numéro de dépôt international:
**PCT/FR2008/000069**

(87) Numéro de publication internationale:
**WO 2008/107554 (12.09.2008 Gazette 2008/37)**

(54) **PROCÉDÉ ET DISPOSITIF DE CRÉATION D'AU MOINS DEUX IMAGES CLÉS CORRESPONDANT À UN OBJET TRIDIMENSIONNEL**

VERFAHREN UND VORRICHTUNG ZUR ERZEUGUNG VON MINDESTENS ZWEI EINEM DREIDIMENSIONALEN OBJEKT ENTSPRECHENDEN SCHLÜSSELBILDERN

METHOD AND DEVICE FOR CREATING AT LEAST TWO KEY IMAGES CORRESPONDING TO A THREE-DIMENSIONAL OBJECT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **22.01.2007 FR 0752810**

(43) Date de publication de la demande:
**28.10.2009 Bulletin 2009/44**

(73) Titulaire: **Qualcomm Connected Experiences, Inc. San Diego, CA 92121 (US)**

(72) Inventeurs:
- **LEFEVRE, Valentin**
  **F-92800 Puteaux (FR)**
- **LIVET, Nicolas**
  **F-75011 Paris (FR)**
- **CHABI, Worou, Pierrick**
  **F-92110 Clichy (FR)**
- **QUEMENER, Yves**
  **F-38690 Le Grand Lemps (FR)**

(74) Mandataire: **Wagner & Geyer Partnerschaft Patent- und Rechtsanwälte Gewürzmühlstrasse 5 80538 München (DE)**

(56) Documents cités:
**EP-A- 1 594 322    DE-A1-102004 061 841**

- **VACCHETTI L ET AL: "Fusing online and offline information for stable 3D tracking in real-time" PROCEEDINGS 2003 IEEE CONFERENCE ON COMPUTER VISION AND PATTERN RECOGNITION. CVPR 2003. MADISON, WI, JUNE 18 - 20, 2003, PROCEEDINGS OF THE IEEE COMPUTER CONFERENCE ON COMPUTER VISION AND PATTERN RECOGNITION, LOS ALAMITOS, CA, IEEE COMP. SOC, US, vol. VOL. 2 OF 2, 18 juin 2003 (2003-06-18), pages 241-248, XP010644679 ISBN: 0-7695-1900-8**
- **VACCHETTI L. ET AL: "Stable Real-Time 3D Tracking Using Online and Offline Information" IEEE TRANSACTIONS ON PATTERN ANALYSIS AND MACHINE INTELLIGENCE, IEEE, NEW YORK, NY, US, vol. 26, no. 10, octobre 2004 (2004-10), pages 1385-1391, XP011116546 ISSN: 0162-8828**
- **CHEN JING ET AL.: "An improved real-time natural feature tracking algorithm for AR application" PROCEEDINGS OF THE 16TH INTERNATIONAL CONFERENCE ON ARTIFICIAL REALITY AND TELEXISTENCE - WORKSHOPS (ICAST'06), 2006, XP008084001**

**Description**

La présente invention concerne la combinaison d'images réelles et virtuelles en temps réel, aussi appelée réalité augmentée, et plus particulièrement un procédé et un dispositif de création d'images clés correspondant à un objet tridimensionnel.

La réalité augmentée a pour objet d'insérer un ou plusieurs objets virtuels dans les images d'un flux vidéo. Selon le type d'application, la position et l'orientation de ces objets virtuels peuvent être déterminées par des données externes à la scène représentée par les images, par exemple des coordonnées issues directement d'un scénario de jeu, ou par des données liées à certains éléments de cette scène, par exemple des coordonnées d'un point particulier de la scène tel que la main d'un joueur. Lorsque la position et l'orientation sont déterminées par des données liées à certains éléments de cette scène, il peut être nécessaire de suivre ces éléments en fonction des mouvements de la caméra ou des mouvements de ces éléments eux-mêmes dans la scène. Les opérations de suivi d'éléments et d'incrustation d'objets virtuels dans les images réelles peuvent être exécutées par des calculateurs distincts ou par un même calculateur.

Il existe plusieurs méthodes de suivi d'éléments dans un flux d'images. Généralement, les algorithmes de suivi d'élément, aussi appelé algorithme de poursuite de cible, utilisent un marqueur qui peut être visuel ou utiliser d'autres moyens tel que des moyens basés sur les radio fréquences ou l'infrarouge. Alternativement, certains algorithmes utilisent une reconnaissance de forme pour suivre un élément particulier dans un flux d'image. e.g. voir le document D1: XP010644679 "Fusing online and offline information for stable 3D tracking in real-time" de Lucca VACHETTI et al. L'Ecole Polytechnique Fédérale de Lausanne a développé un algorithme de suivi visuel n'utilisant pas de marqueur et dont l'originalité réside dans l'appariement de points particuliers entre l'image courante d'un flux vidéo avec une image clé, appelée *keyframe*, donnée par l'utilisateur à l'initialisation du système et une image clé mise à jour durant l'exécution du suivi visuel.

L'objectif de cet algorithme de suivi visuel est de retrouver, dans une scène réelle, la pose, c'est-à-dire la position et l'orientation, d'un objet dont le maillage tridimensionnel est disponible, ou de retrouver les paramètres extrinsèques de position et d'orientation, relativement à cet objet, d'une caméra filmant cet objet, immobile, grâce à l'analyse d'image.

L'image vidéo courante est comparée avec une ou plusieurs images clés enregistrées pour retrouver un nombre important de correspondances entre ces paires d'images afin d'estimer la pose de l'objet. A cette fin, une image clé est composée de deux éléments : une image capturée du flux vidéo et une pose (orientation et position) d'un modèle tridimensionnelle apparaissant dans cette image. Il convient de distinguer les images clés « hors ligne », ou *off line*, des images clés « en ligne », ou *on line.* Les images clés hors ligne sont des images extraites du flux vidéo dans lesquelles l'objet à suivre a été placé manuellement grâce à l'utilisation d'un dispositif de pointage tel qu'une souris ou à l'aide d'un outil de réglage tel qu'un Pocket Dial commercialisé par la société Doepfer. Les images clés hors ligne caractérisent de préférence la pose d'un même objet dans plusieurs images. Elles sont créées et enregistrées « hors ligne », c'est-à-dire hors du régime permanent de l'application. Les images clé « en ligne » sont mémorisées dynamiquement durant l'exécution du programme de suivi. Elles sont calculées lorsque l'erreur, c'est-à-dire la distance entre les appariements des points d'intérêts, est faible. Les images clés en ligne remplacent les images clés hors ligne utilisées pour initialiser l'application. Leur utilisation vise à réduire le décalage, aussi appelé dérive, qui peut devenir important lorsque l'on s'éloigne trop de la position relative initiale entre la caméra et l'objet. L'apprentissage de nouvelles images clés en ligne a aussi pour résultat de rendre l'application plus robuste aux variations de lumière extérieure et aux variations de colorimétries des caméras. Elles ont cependant le désavantage d'introduire un effet de « vibrations » sur la pose de l'objet dans le temps. Lors de l'apprentissage d'une nouvelle image clé en ligne, celle-ci vient remplacer l'image clé précédente, hors ligne ou en ligne. Elle est utilisée comme image clé courante.

Chaque image clé, hors ligne ou en ligne, comprend une image dans laquelle l'objet est présent et une pose pour caractériser l'emplacement de cet objet ainsi qu'un certain nombre de points d'intérêts qui caractérisent l'objet dans l'image. Les points d'intérêts sont, par exemple, construits à partir d'un détecteur de points de Harris et représentent des emplacements avec des fortes valeurs de gradients directionnels dans l'image.

Avant d'initialiser l'application, il est nécessaire de déterminer une ou plusieurs images clés hors ligne. Il s'agit généralement d'images extraites du flux vidéo, qui contiennent l'objet à traquer, et auxquelles sont associées une position et une orientation du modèle tridimensionnel de cet objet. Pour cela, un opérateur fait une opération manuelle qui consiste à faire correspondre visuellement un modèle filaire à l'objet réel. La phase de préparation manuelle consiste donc à retrouver une première estimation de la pose de l'objet dans une image extraite du flux vidéo, ce qui revient à formaliser la transformation affine initiale $T_{p \to c}$ qui correspond à la matrice de passage entre le repère attaché à l'objet vers le repère associé à la caméra. La transformation affine initiale peut se décomposer selon une première transformation $T_{o \to c}$ relative à une position initiale de l'objet, par exemple au centre de l'écran, c'est-à-dire une transformation liée au changement de repère entre le repère de la caméra et le repère de l'objet, et en une seconde transformation $T_{o \to c}$ relative au déplacement et à la rotation de l'objet de sa position initiale au centre de l'écran vers la position et l'orientation dans lesquelles se trouve réellement l'objet sur l'image clé, où $T_{p \to c} = T_{p \to o} \cdot T_{o \to c}$. Si les valeurs a, b et g correspondent à la translation de l'objet de sa position initiale au centre de l'image vers sa position dans l'image clé et si les valeurs q, f et j correspondent à la rotation de l'objet de sa position initiale au centre de l'image vers sa position dans l'image clé selon les axes x, y et z, la transformation $T_{p \to o}$ peut s'exprimer alors sous la forme de la matrice suivante,

$$T_p^o = \begin{bmatrix} \cos\varphi\cos\phi + \sin\varphi\sin\theta\sin\phi & \sin\varphi\cos\phi - \cos\varphi\sin\theta\sin\phi & \cos\theta\sin\phi & \alpha \\ -\sin\varphi\cos\theta & \cos\varphi\cos\theta & \sin\theta & \beta \\ \sin\varphi\sin\theta\cos\phi - \cos\varphi\sin\phi & -\cos\varphi\sin\theta\cos\phi - \sin\varphi\sin\phi & \cos\theta\cos\phi & \gamma \\ 0 & 0 & 0 & 1 \end{bmatrix}$$

L'utilisation de ce modèle permet d'établir le lien entre les coordonnées des points du modèle tridimensionnel de l'objet exprimées dans le repère de l'objet et les coordonnées de ces points dans le repère de la caméra.

Lors de l'initialisation de l'application, les images clés hors ligne sont traitées afin de positionner des points d'intérêts en fonction des paramètres choisis lors du lancement de l'application. Ces paramètres sont spécifiés de façon empirique pour chaque type d'utilisation de l'application et permettent de moduler le noyau de détection d'appariement et d'obtenir une meilleure qualité dans l'estimation de la pose de l'objet selon les caractéristiques de l'environnement réel. Ensuite, lorsque l'objet réel dans l'image courante est dans une pose qui est proche de la pose de ce même objet dans une des images clé hors lignes, le nombre d'appariements devient important. Il est alors possible de retrouver la transformation affine permettant de caler le modèle tridimensionnel virtuel de l'objet sur l'objet réel.

Lorsqu'une telle correspondance a été trouvée, l'algorithme passe en régime permanent. Les déplacements de l'objet sont suivis d'une trame sur l'autre et les dérives éventuelles sont compensées grâce aux informations contenues dans l'image clé hors ligne retenue lors de l'initialisation et dans l'image clé en ligne calculée lors de l'exécution de l'application.

L'application de suivi combine deux types d'algorithme : une détection de points d'intérêts, par exemple une version modifiée de détection de points de Harris, et une technique de reprojection des points d'intérêts positionnés sur le modèle tridimensionnel vers l'image plane. Cette reprojection permet de prévoir le résultat d'une transformation spatiale d'une trame sur l'autre. Ces deux algorithmes combinés permettent un suivi robuste d'un objet selon six degrés de liberté.

D'une façon générale, un point p de l'image est la projection d'un point P de la scène réelle avec $p \sim P_I \cdot P_E \cdot T_{p \to c} \cdot P$ où $P_I$ est la matrice des paramètres intrinsèques de la caméra, c'est-à-dire sa focale, le centre de l'image et le décalage, $P_E$ est la matrice des paramètres extrinsèques de la caméra, c'est-à-dire la position de la caméra dans l'espace réelle, et $T_{p \to c}$ la matrice affine de passage entre le repère associé à l'objet suivi vers le repère de la caméra. Seule la position relative de l'objet par rapport à la position relative de la caméra est ici considérée, ce qui revient à placer le repère de la scène réelle au niveau du centre optique de la caméra. Il en résulte la relation $p \sim P_I \cdot T_{p \to c} \cdot P$ où $T_{p \to c}$ est la matrice de la pose de l'objet dans le repère de la caméra. La matrice $P_I$ étant connue, le problème de suivi consiste donc à déterminer la matrice $T_{p \to c}$.

Cependant, il est important de noter que lorsque la mesure d'erreur devient trop importante, c'est-à-dire lorsque le nombre d'appariements entre l'image clé courante et l'image courante devient trop faible, le suivi subit un décrochage (on considère que l'estimation de la pose de l'objet n'est plus suffisamment cohérente) et une nouvelle phase d'initialisation utilisant toujours les mêmes images clés hors ligne est nécessaire.

La pose d'un objet est estimée selon les correspondances entre les points d'intérêts de l'image courante issue du flux vidéo, les points d'intérêts de l'image clé courante et les points d'intérêts de l'image précédente issue du flux vidéo. Ces opérations sont appelées phase d'appariement. A partir des corrélations les plus significatives, le logiciel calcule la pose de l'objet correspondant le mieux aux observations.

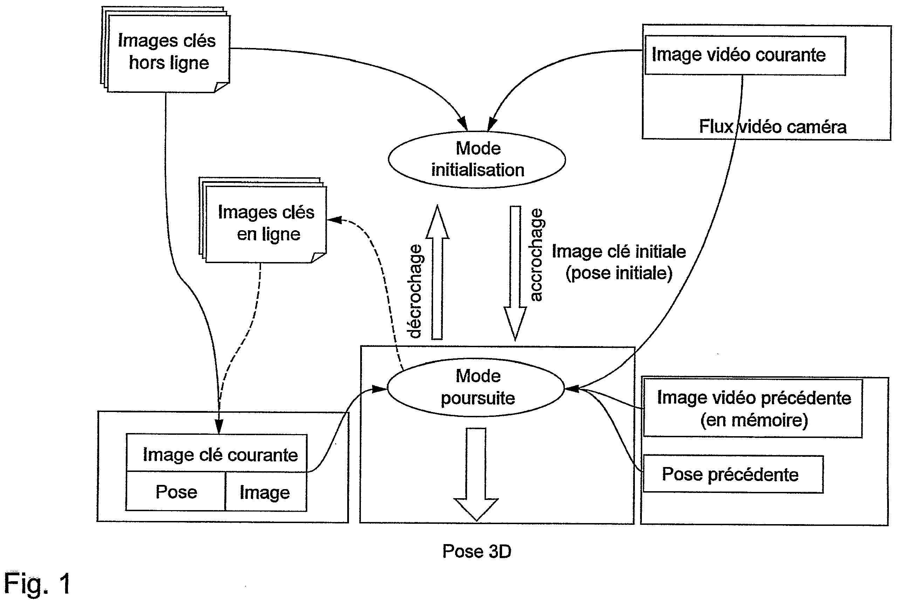

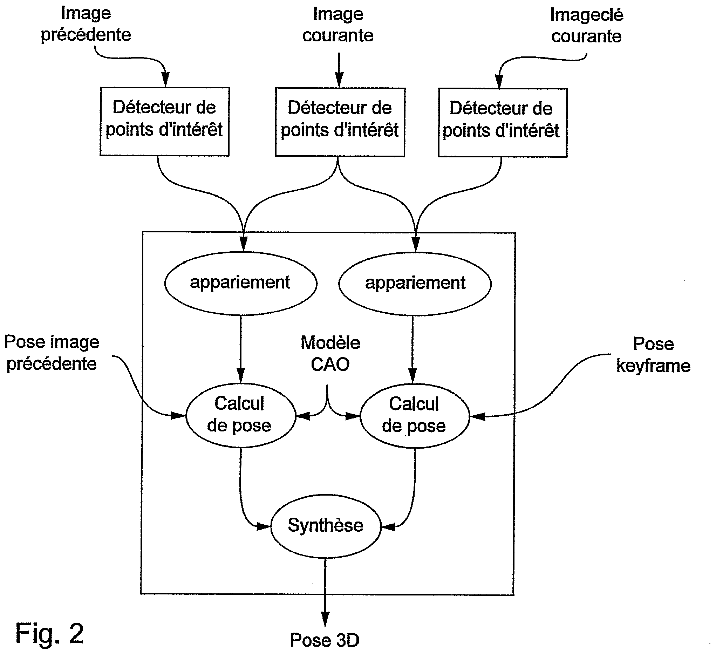

Les figures 1 et 2 illustrent cette application de suivi:

Les solutions proposées sont souvent issues de la recherche et ne prennent pas en compte les contraintes d'implémentation de systèmes commerciaux. En particulier, les problèmes liés à la robustesse, à la possibilité de lancer rapidement l'application sans nécessiter une phase manuelle de création d'images clés hors lignes nécessaires à l'initialisation du système de suivi, à la détection d'erreurs de type « décrochage » (lorsque l'objet à suivre est « perdu ») et à la réinitialisation automatique et temps réel après de telles erreurs sont souvent laissés de côté.

L'invention permet de résoudre au moins un des problèmes exposés précédemment.

L'invention a ainsi pour objet un procédé de création d'au moins deux images clés comprenant chacune une image représentant au moins un objet tridimensionnel dans un environnement tridimensionnel et la pose de l'objet dans cet environnement selon le point de vue de l'image associé, ce procédé étant caractérisé en ce qu'il comprend les étapes suivantes,

- acquisition d'une première image représentant l'objet dans une position initiale déterminée ;
- création d'une première image clé à partir de la première image acquise et de la pose relative de l'objet dans son environnement ;
- acquisition d'au moins une seconde image représentant ledit objet, le point de vue de ladite au moins une seconde image étant différent du point de vue de ladite première image ;
- détermination de la pose relative de l'objet dans son environnement selon la différence des points de vue de la première et de ladite au moins une seconde image, chacun desdits points de vue étant déterminé par rapport à une position et une orientation ; et
- création d'une seconde image clé à partir de ladite au moins une seconde image acquise et de la pose relative de l'objet dans son environnement.

Le procédé selon l'invention permet ainsi d'automatiser la création d'une pluralité d'images clés, en vue notamment d'initialiser ou réinitialiser une application de réalité augmentée utilisant un suivi automatique, en temps réel, d'objets géométriques tridimensionnel, sans marqueur, dans un flux vidéo. Une multitude d'images clés peut en effet permettre à l'application de s'initialiser pour tout type de poses relatives entre l'objet à suivre et la caméra.

Selon une caractéristique particulière, l'acquisition d'au moins une seconde image représentant ledit objet est réalisée au moyen d'une application de suivi.

Selon une autre caractéristique particulière, l'objet est au moins en parti un objet réel.

Selon encore une autre caractéristique particulière, l'objet est au moins en parti un objet virtuel.

Selon une caractéristique particulière, l'objet virtuel est une représentation d'un objet réel selon un modèle virtuel.

Selon une autre caractéristique particulière, l'objet comprend au moins une partie de l'environnement.

Selon un mode de réalisation, les points de vue des images appartiennent à un ensemble de points prédéterminés.

Selon cette caractéristique, la construction d'images clés est réalisée selon un champ de vision déterminé.

Selon un mode particulier de réalisation, les étapes du procédé de création sont répétées pour au moins une partie de l'objet.

L'invention vise également un dispositif de création d'au moins deux images clés comprenant chacune une image représentant au moins un objet tridimensionnel dans un environnement tridimensionnel et la pose de l'objet dans cet environnement selon le point de vue de l'image associé, ce dispositif étant caractérisé en ce qu'il comprend :

- des moyens d'acquisition d'une première image représentant l'objet dans une position initiale déterminée ;
- des moyens de création d'une première image clé à partir de la première image acquise et de la pose relative de l'objet dans son environnement ;
- des moyens d'acquisition d'au moins une seconde image représentant ledit objet, le point de vue de ladite au moins une seconde image étant différent du point de vue de ladite première image ;
- des moyens de détermination de la pose relative de l'objet dans son environnement selon la différence des points de vue de la première et de ladite au moins une seconde image, chacun desdits points de vue étant déterminé par rapport à une position et une orientation ; et
- des moyens de création d'une seconde image clé à partir de ladite au moins une seconde image acquise et de la pose relative de l'objet dans son environnement.

Ce dispositif présente les mêmes avantages que le procédé brièvement décrit ci-dessus et ils ne seront donc pas rappelés ici.

La présente invention vise aussi un moyen de stockage, éventuellement amovible partiellement ou totalement, lisible par un ordinateur ou un microprocesseur comportant des instructions de code d'un programme d'ordinateur pour l'exécution des étapes du procédé tel qu'exposé ci-dessus.

La présente invention vise enfin un programme d'ordinateur comprenant des instructions adaptées à la mise en oeuvre de chacune des étapes du procédé tel qu'exposé ci-dessus.

D'autres avantages, buts et caractéristiques de la présente invention ressortent de la description détaillée qui suit, faite à titre d'exemple non limitatif, au regard des dessins annexés dans lesquels :

- la figure 1 représente schématiquement les principes essentiels de l'application de suivi d'objet développé par l'Ecole Polytechnique Fédérale de Lausanne;
- la figure 2 illustre certaines étapes du procédé pour déterminer la pose d'un objet dans une image d'un flux vidéo à partir d'images clés et de l'image précédente du flux vidéo ;
- la figure 3 représente le schéma global de la création d'images clés d'un objet tridimensionnel et de géométrie quelconque, dans un environnement mettant en oeuvre l'invention ;

- la figure 4 montre un exemple d'appareil permettant d'implémenter au moins partiellement l'invention ;
- la figure 5 illustre un exemple d'apprentissage d'images clés d'un moteur de véhicule ;
- la figure 6 illustre un algorithme d'initialisation automatique d'une application de suivi à partir d'images clés créées à partir d'objets tridimensionnels réels ou virtuels conformément à l'invention ;
- la figure 7 illustre un graphe d'états-transitions pour le suivi d'un objet parmi une pluralité d'objets cibles ;
- la figure 8 illustre un algorithme de suivi dans un paysage ;
- la figure 9 illustre un algorithme de création d'images clés d'un paysage conformément à l'invention ;
- la figure 10 illustre un chemin pour l'apprentissage d'un paysage ; et
- la figure 11 illustre un algorithme de suivi dans un paysage conformément à l'invention.

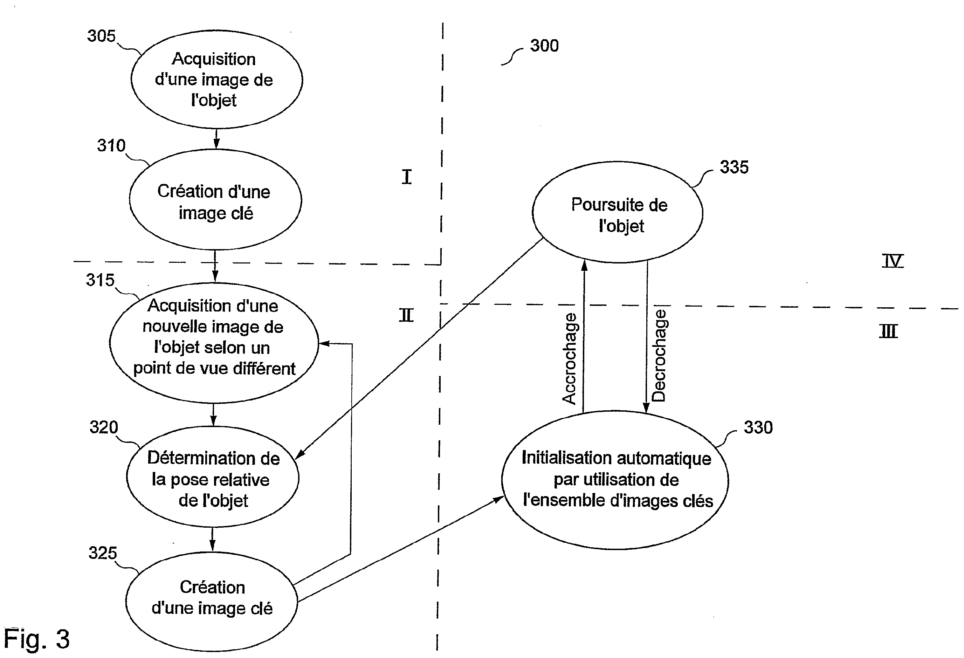

Le procédé selon l'invention a en particulier pour objet la création notamment automatiquement, d'images clés d'un objet tridimensionnel dans un environnement en vue de l'automatisation des phases d'initialisation et de réinitialisation après un décrochage de l'application de suivi d'objet sur des images issues d'un flux vidéo. Une multitude d'images clés peut en effet permettre à l'application de s'initialiser pour tout type de poses relatives entre l'objet à suivre et la caméra. La figure 3 illustre le schéma global de création d'images clés, notamment d'images clés « hors ligne » d'un objet dans un environnement mettant en oeuvre l'invention, pour une application de suivi d'objet.

Comme représenté sur la figure 3, la création d'images clés d'un objet dans un environnement et l'exécution d'une application de suivi (300) en utilisant ces images clés comprennent quatre phases : une phase de création d'une première image clé (I), une phase de création des images clés suivantes automatisée (II), une phase d'initialisation du suivi qui utilise la ou les images clés créées précédemment (III) et une phase de suivi d'objet (IV) qui correspond au régime permanent de l'application.

La phase de création d'une première image clé (I) consiste principalement à l'acquisition d'une première image représentant l'objet tridimensionnel dans une position initiale. Cette acquisition est réalisée, notamment, à partir d'un moyen de prise de vue tel qu'une caméra ou un appareil photo. Après avoir acquis l'image de l'objet tridimensionnel (étape 305), une première image clé est créée (étape 310) comprenant, d'une part, la première image acquise et, d'autre part, la pose relative de l'objet dans l'environnement selon le point de vue de l'image.

Selon l'état de l'art, pour construire une image clé, il convient de placer manuellement le maillage tridimensionnel correspondant à l'objet sur celui-ci dans l'image. Cependant, cette étape est fastidieuse. Toutefois, la connaissance du type d'application peut permettre de réduire de simplifier la création d'une image clé (étape 310). Il sera par exemple pertinent d'utiliser un capteur d'orientation pour des applications ou le déplacement de la caméra contraint en rotation, ou encore d'utiliser un modèle virtuel texturé de l'objet dans une position connue.

Afin d'améliorer la robustesse de l'algorithme de suivi, il est parfois important de capturer une série d'images clés correspondant à plusieurs poses relatives entre la caméra et l'objet. Lors de la phase de création de ces images clés suivantes (II), une première étape consiste à acquérir une nouvelle image représentant l'objet (étape 315), le point de vue de la seconde image étant différent du point de vue de la première image. Ensuite, on détermine la pose relative de l'objet dans son environnement selon la différence des points de vue des images (étape 320), chacun desdits points de vue étant déterminé par rapport à une position et une orientation. Cette étape peut être effectuée de plusieurs façons. Tout d'abord, si le modèle virtuel tridimensionnel texturé de l'objet à suivre est disponible, il est possible de créer ces nouvelles images clés en faisant varier les paramètres de pose de l'objet devant la caméra. Il est aussi particulièrement intéressant d'utiliser l'application de suivi (335) pour générer de nouvelles images clés. Ainsi, les nouvelles images clés créées en ligne pourront être réutilisées pour améliorer la qualité de l'initialisation de l'algorithme de suivi. Enfin, à partir de chaque nouvelle image et de la pose relative de l'objet dans son environnement, une nouvelle image clé est créée (325).

Les étapes de cette phase sont réitérées pour la création d'une pluralité d'images clés.

Lors de la phase d'initialisation (III), à partir de l'ensemble des images clés créées lors de la phase I et de la phase II, l'application de suivi est initialisée par la recherche d'une image clé représentant l'objet dans le flux vidéo contenant l'objet à suivre (étape 330) et se rapprochant le plus de la configuration actuelle (position relative entre la caméra et l'objet).

Lorsque la pose de l'objet est déterminée dans la première image et que l'image clé courante est sélectionnée (image clé déterminée durant la phase d'initialisation) (étape 330), l'application de suivi peut retrouver l'objet (phase IV) dans les images successives du flux vidéo selon un mécanisme de suivi (étape 335). Selon ce mécanisme, les déplacements de l'objet (déplacement de l'objet dans la scène ou déplacement induit par le mouvement de la caméra dans la scène) sont suivis d'une trame sur l'autre et les dérives éventuelles sont compensées grâce aux informations contenues dans l'image clé hors ligne retenue lors de l'initialisation et, éventuellement, dans l'image clé en ligne calculée lors de l'exécution de l'application (image clé qui pourra elle-même servir par la suite comme image clé hors ligne pour initialiser l'application de façon automatique), à la différence près que les nouvelles images clés créées en ligne peuvent être utilisées pour cette étape de réinitialisation.

Lorsque la mesure d'erreur devient trop importante, le suivi subit un décrochage et une phase de réinitialisation est nécessaire. La phase de réinitialisation est similaire à la phase d'initialisation décrite précédemment (étape 330).

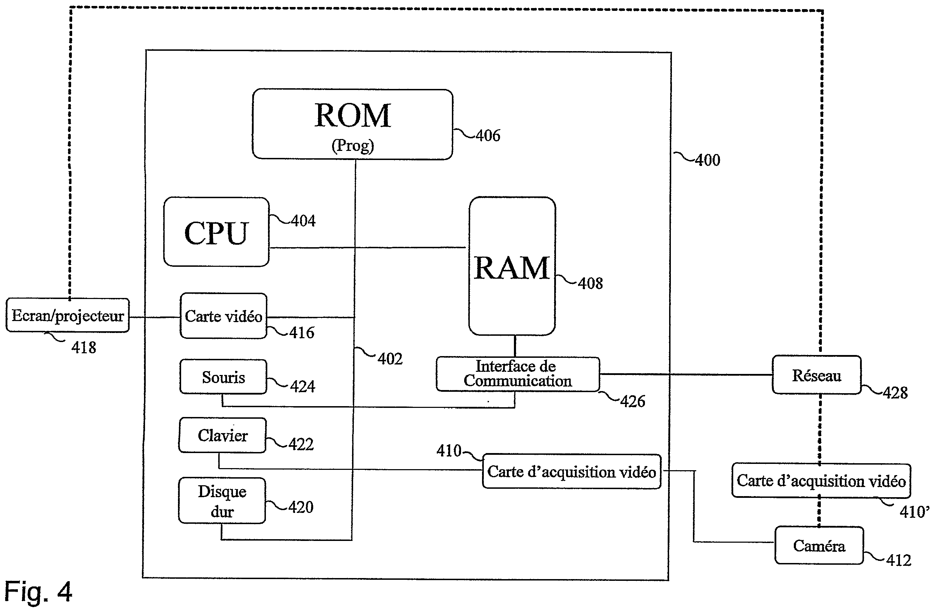

La figure 4 représente schématiquement un appareil adapté à mettre en oeuvre l'invention. L'appareil 400 est par exemple un micro-ordinateur, une station de travail ou une console de jeux.

L'appareil 400 comporte de préférence un bus de communication 402 auquel sont reliés :

- une unité centrale de traitement ou microprocesseur 404 (CPU, *Central Processing Unit*) ;
- une mémoire morte 406 (ROM, *Read Only Memory*) pouvant comporter le système d'exploitation et des programmes tels que "Prog" ;
- une mémoire vive ou mémoire cache 4 08 (RAM, *Random Access Memory*) comportant des registres adaptés à enregistrer des variables et paramètres créés et modifiés au cours de l'exécution des programmes précités ;
- une carte d'acquisition vidéo 410 reliée à une caméra 412 ; et,
- une carte graphique 416 reliée à un écran ou à un projecteur 418.

Optionnellement, l'appareil 400 peut également disposer des éléments suivants :

- un disque dur 420 pouvant comporter les programmes "Prog" précités et des données traitées ou à traiter selon l'invention ;
- un clavier 422 et une souris 424 ou tout autre dispositif de pointage comme un crayon optique, un écran tactile ou une télécommande permettant à l'utilisateur d'interagir avec les programmes selon l'invention ;
- une interface de communication 426 reliée à un réseau de communication distribué 428, par exemple le réseau Internet, l'interface étant apte à transmettre et à recevoir des données ;
- une carte d'acquisition de données 414 reliée à un capteur (non représenté) ; et,
- un lecteur de cartes mémoires (non représenté) adapté à y lire ou à y écrire des données traitées ou à traiter selon l'invention.

Le bus de communication permet la communication et l'interopérabilité entre les différents éléments inclus dans l'appareil 400 ou reliés à lui. La représentation du bus n'est pas limitative et, notamment, l'unité centrale est susceptible de communiquer des instructions à tout élément de l'appareil 400 directement ou par l'intermédiaire d'un autre élément du l'appareil 400.

Le code exécutable de chaque programme permettant à l'appareil programmable de mettre en oeuvre les processus selon l'invention, peut être stocké, par exemple, dans le disque dur 420 ou en mémoire morte 406.

Selon une variante, le code exécutable des programmes pourra être reçu par l'intermédiaire du réseau de communication 428, via l'interface 426, pour être stocké de façon identique à celle décrite précédemment.

Les cartes mémoires peuvent être remplacées par tout support d'information tel que, par exemple, un disque compact (CD-ROM ou DVD). De manière générale, les cartes mémoires peuvent être remplacées par des moyens de stockage d'information, lisibles par un ordinateur ou par un microprocesseur, intégrés ou non à l'appareil, éventuellement amovibles, et adaptés à mémoriser un ou plusieurs programmes dont l'exécution permet la mise en oeuvre du procédé selon l'invention.

De manière plus générale, le ou les programmes pourront être chargés dans un des moyens de stockage de l'appareil 400 avant d'être exécutés.

L'unité centrale 404 va commander et diriger l'exécution des instructions ou portions de code logiciel du ou des programmes selon l'invention, instructions qui sont stockées dans le disque dur 420 ou dans la mémoire morte 406 ou bien dans les autres éléments de stockage précités. Lors de la mise sous tension, le ou les programmes qui sont stockés dans une mémoire non volatile, par exemple le disque dur 420 ou la mémoire morte 406, sont transférés dans la mémoire vive 408 qui contient alors le code exécutable du ou des programmes selon l'invention, ainsi que des registres pour mémoriser les variables et paramètres nécessaires à la mise en oeuvre de l'invention.

Il convient de noter que l'appareil de communication comportant le dispositif selon l'invention peut également être un appareil programmé. Cet appareil contient alors le code du ou des programmes informatiques par exemple figé dans un circuit intégré à application spécifique (ASIC).

Alternativement, l'image issue de la carte vidéo 416 peut être transmise à l'écran ou au projecteur 418 à travers l'interface de communication 426 et le réseau de communication distribué 428. De même, la caméra 412 peut être reliée à une carte d'acquisition vidéo 410', distincte de l'appareil 400, de telle sorte que les images issues de la caméra 412 soient transmises à l'appareil 400 à travers le réseau de communication distribué 428 et l'interface de communication 426.

En raison de la simplification de mise en oeuvre apportée par le procédé de l'invention, la création d'images clés peut être mise en oeuvre sans avoir recours à un spécialiste. A l'issue de la création d'un ensemble d'images clés, une application de suivi peut être initialisée à partir de cet ensemble et utilisée de façon standard pour suivre un objet dans une séquence d'images issues d'un flux vidéo, par exemple pour incruster une séquence vidéo sur un objet de la scène en prenant en compte la position et l'orientation de cet objet, mais aussi pour déterminer le mouvement d'une caméra selon l'analyse d'un objet de la scène. Dans ce cas, l'objet fait partie du décor et retrouver la pose de cet objet dans la scène revient donc à retrouver la pose de la caméra par rapport à celui-ci. Il devient alors possible d'ajouter des éléments virtuels dans la scène à condition que la transformation géométrique entre l'objet et le modèle géométrique de la scène soit connue. Ce qui est le cas. Cette approche autorise donc à augmenter la scène réelle avec des objets virtuels animés qui se déplacent en fonction de la géométrie de la scène.

En particulier, selon un premier exemple de réalisation, l'application peut consister à estimer la pose d'un objet tridimensionnel, par exemple un moteur dans un véhicule et ajouter des informations sur cet objet afin de donner à l'utilisateur des informations concernant cet objet, par exemple le montage et le démontage du moteur.

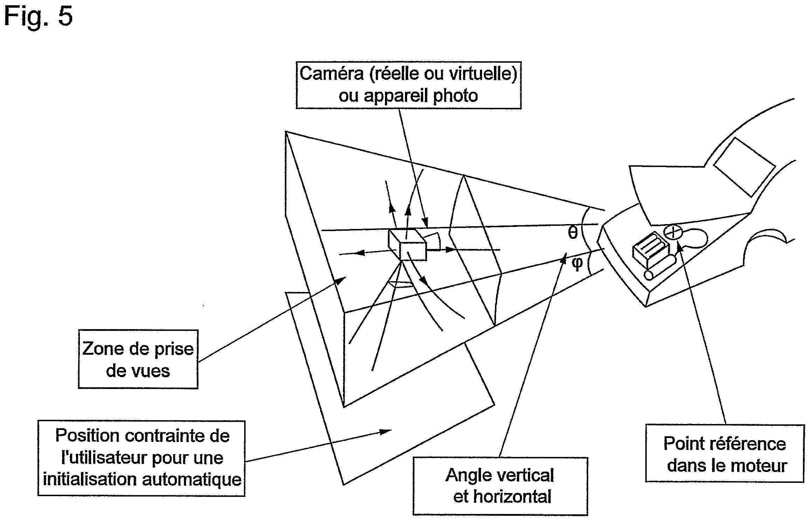

Pour ce faire, l'application nécessite un apprentissage de plusieurs images clés qui permettront ensuite l'initialisation automatique de l'application de suivi dans l'image. Etant donné que l'on connaît approximativement la position de l'utilisateur, on connait incidemment la position de la caméra par rapport à l'objet tridimensionnel à suivre. Ainsi, la création des images clés (phases I et II) et l'initialisation (phase III) sont rendues simplifiées par le fait que la position de l'utilisateur par rapport à l'objet tridimensionnel est connue et qu'un nombre peu important d'images clés est requis pour rendre l'initialisation totalement automatique. En effet, la position, correspondant notamment à une hauteur d'homme, soit environ 1,70 mètre et à orientation plus ou moins face à l'objet tridimensionnel permet l'utilisation de quelques images clés pertinentes dans cette zone de vue. La figure 5 illustre schématiquement la prise de vue pour la réalisation des images clés.

Dans un premier mode de réalisation, pour permettre l'initialisation automatique du système de suivi d'objet tridimensionnel, une phase d'apprentissage est nécessaire consistant à acquérir un certain nombre d'images clés contenant l'objet tridimensionnel dans la zone de prise de vues de l'utilisateur.

La zone de prise de vues peut être adaptée en fonction du cas d'utilisation.

Selon un second mode de réalisation, la phase d'apprentissage des images clés est réalisée au moyen de modèles tridimensionnel de synthèse texturés de l'objet, par exemple du moteur et de la voiture. Selon ce mode de réalisation, l'apprentissage automatique est réalisé en faisant varier les angles $\Theta$ et $\varphi$ correspondant à l'angle vertical et horizontal de la caméra (réelle ou virtuelle) et la distance de la caméra par rapport au modèle tridimensionnel de l'objet.

En effet, si l'on dispose du modèle tridimensionnel texturé de la géométrie de l'objet, par exemple de la voiture et de son moteur, ce modèle peut être déplacé dans le champ de vision de la caméra. On obtient alors une série de rendu tridimensionnel de l'objet au moyen d'images, correspondant à l'objet sous différents angles de vue. Ces images sont aussi associées à la pose connue de l'objet, déterminée à partir des paramètres $\Theta$, $\varphi$ et de la distance de la caméra par rapport à l'objet. Ainsi, un ensemble d'images clés est créé de façon totalement automatique (phases I et II).

Selon ce mode de réalisation, la phase d'apprentissage est ainsi peu coûteuse et permet notamment de préparer la maintenance d'un produit avant même sa fabrication. En effet, le modèle CAO (« Conception Assistée par Ordinateur ») du produit est le plus souvent modélisé avant même sa construction réelle.

En outre, le modèle CAO texturé, d'un objet, utilisé dans différentes conditions d'éclairage permet de se rapprocher des conditions de l'environnement réel.

La phase suivante (phase III) est l'initialisation automatique à partir des images clés.

Cette initialisation consiste en une première estimation de la pose de l'objet tridimensionnel. Dans l'exemple considéré, l'estimation de la pose du moteur est réalisée au moment où l'utilisateur ouvre le capot de la voiture. A ce moment, un nombre important de points d'intérêts de l'image en cours est en effet corrélé avec l'une des images clés.

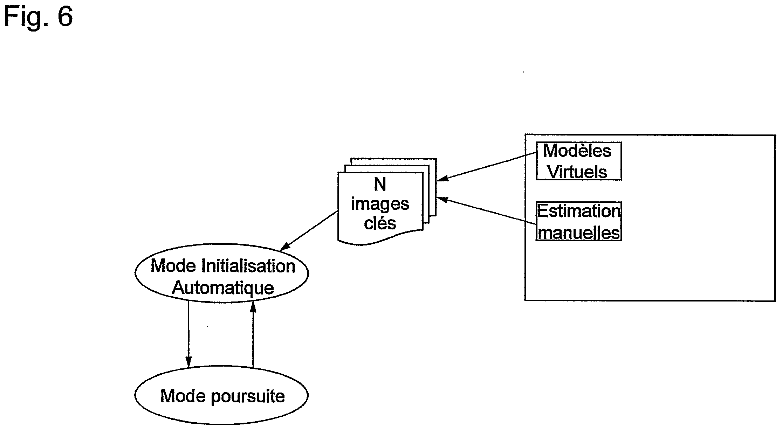

La Figure 6 illustre l'initialisation automatique des images clés à partir d'objets tridimensionnels réels ou virtuels.

Selon un second exemple de réalisation, l'application peut consister à retrouver la pose d'un objet dans une pluralité d'objets cibles, lesquels peuvent être activés pour leur suivi. L'activation d'un objet cible peut être réalisée manuellement, notamment au moyen d'une interface de type OCX (« OLE (Object Linking and Embedding) Control Extension » en terminologie anglo-saxonne).

Considérons, en exemple, une machine outil.

Dans l'application courante, par exemple, la pose de l'ensemble de la machine est retrouvée en position de caméra éloignée, alors que de près, seul une partie bien précise de la machine outil, par exemple un boîtier électrique, sera suivie, tout d'abord du point de vue extérieur puis du point de vue intérieur.

Selon ce mode de réalisation, l'utilisation d'automates de type états-transitions permet de changer les images clés en fonction de l'état courant et de suivre la pose d'objets différents.

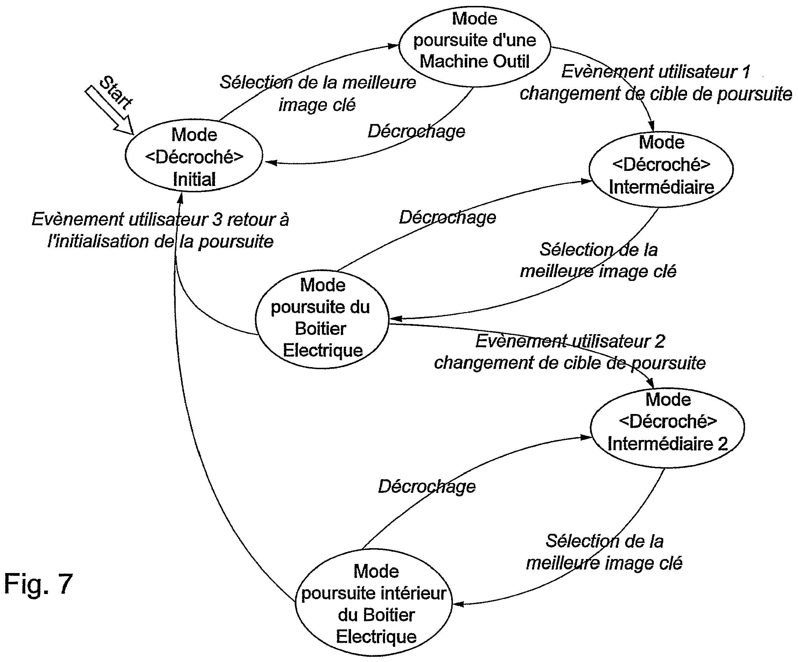

La figure 7 illustre un automate d'états-transitions pour l'exemple considéré.

Les transitions d'un état à un autre état sont déclenchées lorsque l'utilisateur se rapproche d'un nouvel objet à suivre et commande, par exemple à l'aide d'un bouton, un changement de l'objet cible à suivre.

L'application de suivi passe alors dans un mode décroché intermédiaire, mode équivalent à un mode d'initialisation, ce qui nécessite l'utilisation d'une nouvelle série d'images clés correspondant à l'objet cible sélectionné et associé au nouvel état de l'automate.

Selon un troisième exemple de réalisation, l'application peut consister à retrouver la position de l'axe de visée d'un utilisateur. En effet, dans une application telle qu'un simulateur de tir, selon ce mode de réalisation, l'application peut consister à retrouver la position de l'axe de visée du canon notamment par un appariement de points d'intérêts entre l'image courante et le paysage du simulateur de tir.

Dans ce mode de réalisation, la caméra a une position statique puisqu'elle est fixée sur un trépied fixe et les conditions extérieures sont constantes. En effet, le paysage du simulateur de tir ne comprend pas de changement de météo ni l'apparition soudaine de gros objets occultant se déplaçant dans le paysage

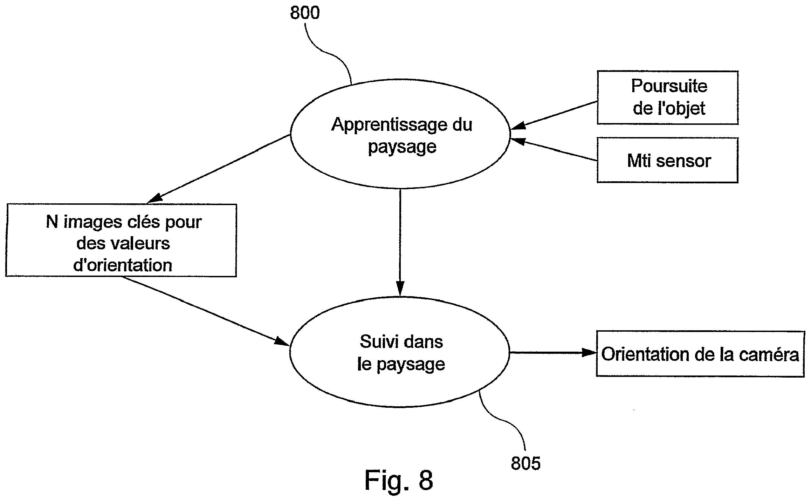

Selon ce mode de réalisation, l'application comprend notamment deux étapes illustrées en figure 8, à savoir une étape d'apprentissage du paysage (étape 800) consistant à la création d'une pluralité d'images clés du paysage (phase I et II), associées à des valeurs des paramètres de lacet (« yaw »), tangage (« pitch ») et roulis (« roll ») déterminés au moyen par exemple d'un capteur, et une étape de suivi dans le paysage (étape 805) dans laquelle les images clés précédemment mémorisées sont utilisées pour l'appariement et l'estimation de la pose courante de la caméra. Cette approche est rendue possible par la connaissance sur le type de l'application. En effet, dans cette réalisation, le mouvement de caméra est contraint à des rotations, ce qui permet l'utilisation d'un capteur.

Selon ce mode de réalisation, l'application de suivi est couplée avec un capteur de mouvement, par exemple un capteur de type Sensor Mti de la société MTI Instrument ou un capteur de type inertiaCube3 de la société Intersense. Malgré le fait que ce capteur ne soit pas suffisamment précis pour trouver une orientation précise dans l'image, celui-ci permet de corriger sensiblement le suivi en cas d'erreur.

La phase d'apprentissage consiste à déplacer la caméra autour de son axe vertical, notamment défini par le trépied, et à acquérir un certain nombre d'images clés en fonction de l'orientation de la caméra selon les paramètres de lacet (« yaw »), tangage (« pitch ») et roulis (« roll »).

Cette phase a la particularité d'utiliser l'algorithme de poursuite de l'objet afin de créer de nouvelles images clés (étapes 325).

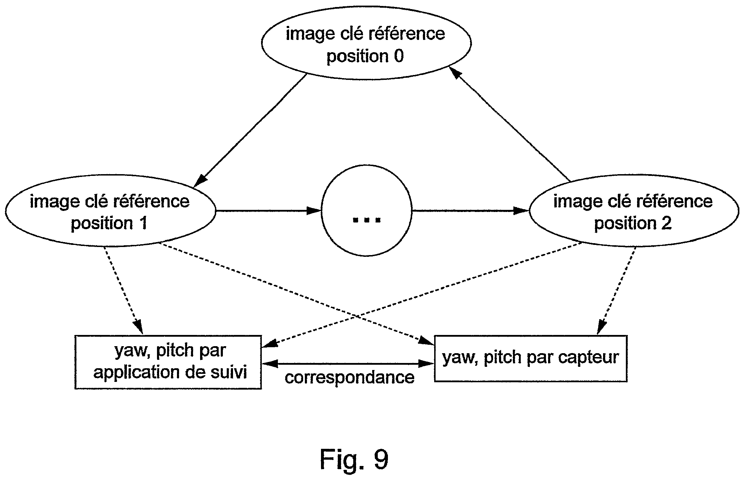

Cet algorithme est illustré en figure 9.

L'algorithme débute à une position « 0 », par l'acquisition d'une première image clé et par la recherche des points d'intérêts dans cette première image. Ensuite, la caméra subit une rotation selon le paramètre de lacet ou de tangage. L'application de suivi permet alors de retrouver les correspondances entre les points d'intérêts de la première image clé acquise à la position « 0 » et l'image courante du flux vidéo.

Lorsque le nombre d'appariement devient trop faible, une nouvelle image fait l'objet d'une acquisition à la position courante selon les paramètres de lacet et de tangage. Cette nouvelle image devient l'image clé.

Afin de limiter les dérives sur ce type d'apprentissage, la caméra peut revenir régulièrement à sa position initiale.

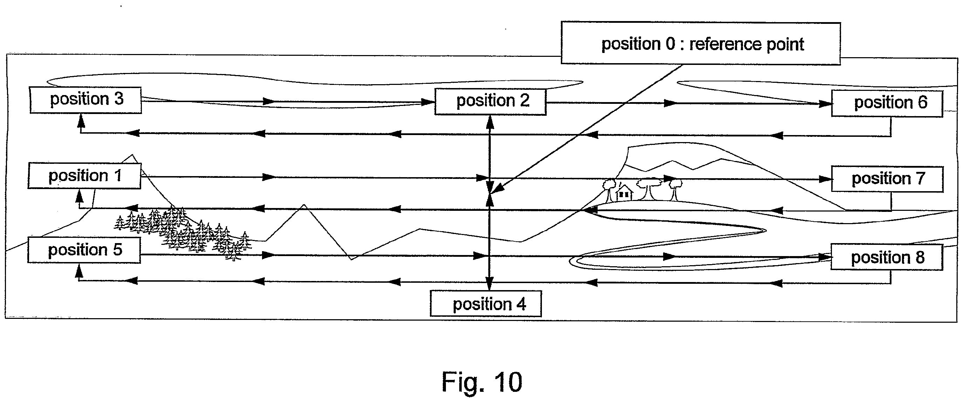

Il est illustré en figure 10 un exemple de chemin pour l'apprentissage d'un paysage permettant notamment d'éviter les dérives.

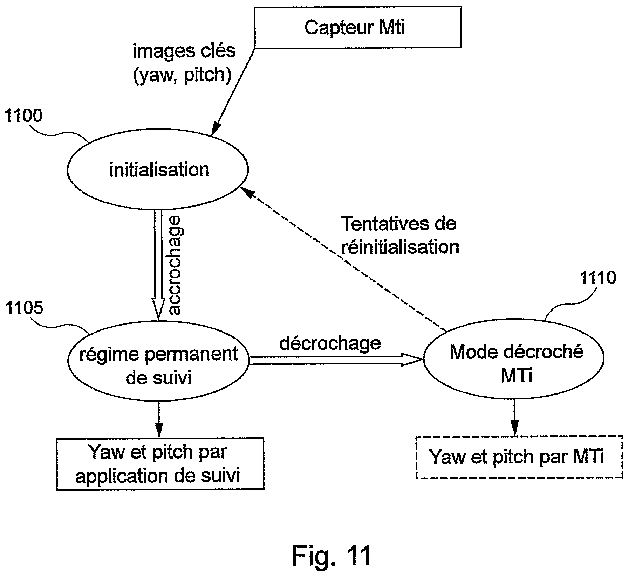

Il est maintenant décrit un algorithme de suivi selon ce mode de réalisation, illustré en figure 11.

Lors de l'exécution de l'application de suivi, les informations apprises précédemment sont utilisées afin de retrouver l'image clé hors ligne pour l'initialisation automatique de la phase de suivi. Cette initialisation (étape 1100) peut être réalisée notamment au moyen d'un capteur, par exemple un capteur de type Mti qui donne les informations de paramètres d'orientation de la caméra.

Après cette étape d'initialisation, l'application de suivi est exécutée (étape 1105).

Toutefois, le suivi d'un objet peut décrocher (étape 1110), par exemple, lorsque la météo change ou lorsque l'utilisateur tourne rapidement la caméra ou que l'utilisateur sort de la zone de paysage apprise. Dans ce cas, l'application de suivi passe en mode secours afin de prolonger l'illusion de suivi au cours duquel, par exemple, le capteur MTi va décider de l'orientation courante de la caméra.

L'algorithme de suivi tente alors de se raccrocher en réalisant par exemple une initialisation automatique au moyen des paramètres d'orientation émis par le capteur.

Dans le mode décroché, le suivi est donc maintenu par l'utilisation du capteur, notamment du capteur Mti. La précision d'un tel capteur étant peu importante, il est procédé à des tentatives de ré-initialisation.

Lors de l'exécution de l'application de suivi, les déplacements de caméras permettent de retrouver une nouvelle image clé pour le suivi. En effet les déplacements sont reproduits selon les paramètres de lacet et de tangage des orientations de la caméra. Lorsque le nombre de points d'intérêts entre l'image courante et l'image clé n'est plus suffisant, il faut utiliser une nouvelle image clé selon les nouveaux paramètres d'orientations de cet espace.

Naturellement, pour satisfaire des besoins spécifiques, une personne compétente dans le domaine de l'invention pourra appliquer des modifications dans la description précédente.

**Revendications**

1. Procédé de création automatique d'au moins deux images clés d'initialisation comprenant chacune une image représentant au moins un objet tridimensionnel dans un environnement tridimensionnel et la pose de l'objet dans cet environnement selon le point de vue de l'image associé, ce procédé étant **caractérisé en ce qu'**il comprend les étapes suivantes,

- acquisition d'une première image représentant l'objet dans une position initiale déterminée ;
- création d'une première image clé à partir de la première image acquise et de la pose relative de l'objet dans son environnement ;
- acquisition d'au moins une seconde image représentant ledit objet, le point de vue de ladite au moins une seconde image étant différent du point de vue de ladite première image ;
- détermination de la pose relative de l'objet dans son environnement selon la différence des points de vue de la première et de ladite au moins une seconde image, chacun desdits points de vue étant déterminé par rapport à des paramètres de position et d'orientation, au moins l'un desdits paramètres étant déterminé indépendamment desdites images ; et
- création de ladite au moins une seconde image clé à partir de ladite au moins une seconde image acquise et de la pose relative de l'objet dans son environnement.

2. Procédé de création selon la revendication 1 selon lequel ledit au moins l'un desdits paramètres est déterminé selon une position prédéterminée.

3. Procédé de création selon la revendication 1 ou la revendication 2 selon lequel le calcul dudit au moins l'un desdits paramètres est basé sur une valeur issue d'un capteur d'orientation.

4. Procédé de création selon l'une quelconque des revendications précédentes, **caractérisé en ce que** l'acquisition d'au moins une seconde image représentant ledit objet est réalisée au moyen d'une application de suivi.

5. Procédé de création selon l'une quelconque des revendications précédentes, **caractérisé en ce que** ledit objet est au moins en partie un objet réel.

6. Procédé de création selon l'une quelconque des revendications précédentes, **caractérisé en ce que** l'objet est au moins en partie un objet virtuel.

7. Procédé de création selon la revendication 6, **caractérisé en ce que** l'objet virtuel est une représentation d'un objet réel selon un modèle virtuel.

8. Procédé de création selon la revendication 6 ou la revendication 7, **caractérisé en ce que** l'objet comprend au moins une partie de l'environnement.

9. Procédé de création selon l'une quelconque des revendications précédentes, **caractérisé en ce que** les points de vue des images appartiennent à un ensemble de points prédéterminés.

10. Procédé de création selon l'une quelconque des revendications précédentes, **caractérisé en ce que** les étapes du procédé de création sont répétées pour au moins une partie de l'objet.

11. Programme d'ordinateur comprenant des instructions adaptées à la mise en oeuvre de chacune des étapes du procédé selon l'une quelconque des revendications précédentes.

12. Moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'une quelconque des revendications 1 à 10.

13. Dispositif de création automatique d'au moins deux images clés d'initialisation comprenant chacune une image représentant au moins un objet tridimensionnel dans un environnement tridimensionnel et la pose de l'objet dans cet environnement selon le point de vue de l'image associé, ce dispositif étant **caractérisé en ce qu'**il comprend :

- des moyens d'acquisition d'une première image représentant l'objet dans une position initiale déterminée ;
- des moyens de création d'une première image clé à partir de la première image acquise et de la pose relative de l'objet dans son environnement ;
- des moyens d'acquisition d'au moins une seconde image représentant ledit objet, le point de vue de ladite au moins une seconde image étant différent du point de vue de ladite première image ;
- des moyens de détermination de la pose relative de l'objet dans son environnement selon la différence des points de vue de la première et de ladite au moins une seconde image, chacun desdits points de vue étant déterminé par rapport à des paramètres de position et d' orientation, au moins l'un desdits paramètres étant déterminé indépendamment desdites images ; et
- des moyens de création de ladite au moins une seconde image clé à partir de ladite au moins une seconde image acquise et de la pose relative de l'objet dans son environnement.

**14.** Dispositif de création selon la revendication 13 comprenant en outre des moyens pour acquérir au moins une valeur à partir d'un capteur angulaire, ladite valeur étant utilisée pour calculer ledit au moins l'un desdits paramètres.

**15.** Dispositif de création selon la revendication 13 ou la revendication 14, **caractérisé en ce que** les moyens d'acquisition d'au moins une seconde image représentant ledit objet sont aptes à acquérir au moins une seconde image au moyen d'une application de suivi.

**16.** Dispositif de création selon l'une quelconque des revendications 13 à 15, **caractérisé en ce que** l'objet est au moins en partie un objet réel ou au moins en partie un objet virtuel.

**17.** Dispositif de création selon l'une quelconque des revendications 13 à 16, **caractérisé en ce que** les points de vue des images appartiennent à un ensemble de points prédéterminés.

**Patentansprüche**

**1.** Ein Verfahren zur automatischen Erzeugung von wenigstens zwei Initialisierungsschlüsselrahmen, von denen jeder ein Bild aufweist, das wenigstens ein dreidimensionales Objekt in einer dreidimensionalen Umgebung und die Stellung des Objektes in dieser Umgebung gemäß dem assoziierten Bildblickpunkt darstellt, wobei das Verfahren **dadurch gekennzeichnet ist, dass** es die folgenden Schritte aufweist:

Erfassen eines ersten Bildes, das das Objekt in einer bestimmten anfänglichen Position darstellt;
Erzeugen eines ersten Schlüsselrahmens aus dem erfassten ersten Bild und der relativen Stellung des Objektes in seiner Umgebung;
Erfassen von wenigstens einem zweiten Bild, das das Objekt darstellt, wobei sich der Blickpunkt des wenigstens einen zweiten Bildes von dem Blickpunkt des ersten Bildes unterscheidet;
Bestimmen der relativen Stellung des Objektes in seiner Umgebung gemäß der Differenz der Blickpunkte des ersten Bildes und des wenigstens einen zweiten Bildes, wobei jeder der Blickpunkte relativ zu Positions- und Ausrichtungsparametern bestimmt wird, wobei wenigstens einer der Parameter unabhängig von den Bildern bestimmt wird; und
Erzeugen des wenigstens einen zweiten Schlüsselrahmens aus dem erfassten wenigstens einen zweiten Bild und der relativen Stellung des Objektes in seiner Umgebung.

**2.** Erzeugungsverfahren nach Anspruch 1, wobei der wenigstens eine der Parameter gemäß einer vorbestimmten Position bestimmt wird.

**3.** Erzeugungsverfahren nach Anspruch 1 oder 2, wobei die Berechnung des wenigstens einen der Parameter auf einem Wert basiert, der von einem Ausrichtungssensor stammt.

**4.** Erzeugungsverfahren nach einem der vorhergehenden Ansprüche, **dadurch gekennzeichnet, dass** die Erfassung des wenigstens einen zweiten Bildes, das das Objekt darstellt, durch Mittel einer Nachverfolgungsanwendung bewirkt wird.

**5.** Erzeugungsverfahren nach einem der vorhergehenden Ansprüche, **dadurch gekennzeichnet, dass** das Objekt wenigstens Teil eines realen Objektes ist.

**6.** Erzeugungsverfahren nach einem der vorhergehenden Ansprüche, **dadurch gekennzeichnet, dass** das Objekt wenigstens Teil eines virtuellen Objektes ist.

**7.** Erzeugungsverfahren nach Anspruch 6, **dadurch gekennzeichnet, dass** das virtuelle Objekt eine Darstellung eines realen Objektes gemäß einem virtuellen Modell ist.

**8.** Erzeugungsverfahren nach Anspruch 6 oder Anspruch 7, **dadurch gekennzeichnet, dass** das Objekt wenigstens einen Teil der Umgebung aufweist.

9. Erzeugungsverfahren nach einem der vorhergehenden Ansprüche, **dadurch gekennzeichnet, dass** die Blickpunkte der Bilder zu einem Satz von vorbestimmten Punkten gehören.

10. Erzeugungsverfahren nach einem der vorhergehenden Ansprüche, **dadurch gekennzeichnet, dass** die Schritte des Erzeugungsverfahrens für wenigstens einen Teil des Objektes wiederholt werden.

11. Ein Computerprogramm, das Instruktionen aufweist, die ausgelegt sind jeden der Schritte des Verfahrens gemäß einem der vorhergehenden Ansprüche auszuführen.

12. Ein Informationsspeichermedium, das entfernbar ist oder nicht, das teilweise oder vollständig durch einen Computer oder einen Mikroprozessor lesbar ist, das Codeinstruktionen eines Computerprogramms enthält zum Ausführen jedes der Schritte des Verfahrens gemäß einem der Ansprüche 1 bis 10.

13. Eine Einrichtung zur automatischen Erzeugung von wenigstens zwei Initialisierungsschlüsselrahmen, von denen jeder ein Bild aufweist, das wenigstens ein dreidimensionales Objekt in einer dreidimensionalen Umgebung und die Stellung des Objektes in dieser Umgebung gemäß dem assoziierten Bildblickpunkt darstellt, wobei die Einrichtung **dadurch gekennzeichnet ist, dass** sie Folgendes aufweist:

    Mittel zum Erfassen eines ersten Bildes, das das Objekt in einer bestimmten anfänglichen Position darstellt;
    Mittel zum Erzeugen eines ersten Schlüsselrahmens aus dem erfassten ersten Bild und der relativen Stellung des Objektes in seiner Umgebung;
    Mittel zum Erfassen von wenigstens einem zweiten Bild, das das Objekt darstellt, wobei sich der Blickpunkt des wenigstens einen zweiten Bildes von dem Blickpunkt des ersten Bildes unterscheidet;
    Mittel zum Bestimmen der relativen Stellung des Objektes in seiner Umgebung gemäß der Differenz der Blickpunkte des ersten Bildes und des wenigstens einen zweiten Bildes, wobei jeder der Blickpunkte relativ zu Positions- und Ausrichtungsparametern bestimmt wird, wobei wenigstens einer der Parameter unabhängig von den Bildern bestimmt wird; und
    Mittel zum Erzeugen des wenigstens einen zweiten Schlüsselrahmens aus dem erfassten wenigstens einen zweiten Bild und der relativen Stellung des Objektes in seiner Umgebung.

14. Erzeugungseinrichtung nach Anspruch 13, die weiter Mittel aufweist zum Erfassen wenigstens eines Wertes von einem Winkelsensor, wobei der Wert verwendet wird zum Berechnen des wenigstens einen der Parameter.

15. Erzeugungseinrichtung nach Anspruch 13 oder Anspruch 14, **dadurch gekennzeichnet, dass** die Mittel zum Erfassen des wenigstens einen zweiten Bildes, das das Objekt darstellt, ausgelegt sind zum Erfassen wenigstens eines zweiten Bildes durch Mittel einer Nachverfolgungsanwendung.

16. Erzeugungseinrichtung nach einem der Ansprüche 13 bis 15, **dadurch gekennzeichnet**, das das Objekt wenigstens teilweise ein reales Objekt ist oder wenigstens teilweise ein virtuelles Objekt ist.

17. Erfassungseinrichtung nach einem der Ansprüche 13 bis 16, **dadurch gekennzeichnet, dass** die Bildblickpunkte zu einem Satz von vorbestimmten Punkten gehören.

**Claims**

1. Method of automatic creation of at least two initialization key frames each comprising an image representing at least one three-dimensional object in a three-dimensional environment and the pose of the object in that environment according to the associated image viewpoint, this method being **characterized in that** it comprises the following steps:

    acquisition of a first image representing the object in a particular initial position;
    creation of a first key frame from the first image acquired and the relative pose of the object in its environment;
    acquisition of at least one second image representing said object, the viewpoint of said at least one second image being different from the viewpoint of said first image;
    determination of the relative pose of the object in its environment according to the difference of the viewpoints of the first image and said at least one second image, each of said viewpoints being determined relative to position and orientation parameters, at least one of said parameters being determined independently of said images; and

creation of said at least one second key frame from the acquired at least one second image and the relative pose of the object in its environment.

2. Creation method according to claim 1, wherein said at least one of said parameters is determined according to a predetermined position.

3. Creation method according to claim 1 or claim 2, wherein the calculation of said at least one of said parameters is based on a value coming from an orientation sensor.

4. Creation method according to one of the preceding claims, **characterized in that** the acquisition of at least one second image representing said object is effected by means of a tracking application.

5. Creation method according to one of the preceding claims **characterized in that** said object is at least part of a real object.

6. Creation method according to one of the preceding claims, **characterized in that** the object is at least part of a virtual object.

7. Creation method according to claim 6, **characterized in that** the virtual object is a representation of a real object according to a virtual model.

8. Creation method according to claim 6 or claim 7, **characterized in that** the object comprises at least part of the environment.

9. Creation method according to one of the preceding claims, **characterized in that** the viewpoints of the images belong to a set of predetermined points.

10. Creation method according to one of the preceding claims, **characterized in that** the steps of the creation method are repeated for at least one part of the object.

11. Computer program including instructions adapted to execute each of the steps of the method according to one of the preceding claims.

12. Information storage medium, removable or otherwise, partly or totally readable by a computer or a microprocessor, containing code instructions of a computer program for executing each of the steps of the method according to one of the claims 1 to 10.

13. Device for automatic creation of at least two initialization key frames each comprising an image representing at least one three-dimensional object in a three-dimensional environment and the pose of the object in that environment according to the associated image viewpoint, this device being **characterized in that** it comprises:

means for acquisition of a first image representing the object in a particular initial position;
means for creation of a first key frame from the acquired first image and the relative pose of the object in its environment;
means for acquisition of at least one second image representing said object, the viewpoint of said at least one second image being different from the viewpoint of said first image;
means for determination of the relative pose of the object in its environment according to the difference of the viewpoints of the first image and said at least one second image, each of said viewpoints being determined relative to position and orientation parameters, at least one of said parameters being determined independently of said images; and
means for creation of said at least one second key frame from the acquired at least one second image and the relative pose of the object in its environment.

14. Creation device according to claim 13 further comprising means for acquiring at least one value from an angular sensor, said value being used to calculate said at least one of said parameters.

15. Creation device according to claim 13 or claim 14, **characterized in that** the means for acquisition of at least one second image representing said object are adapted to acquire at least one second image by means of a tracking application.

16. Creation device according to one of the claim 13 to 15, **characterized in that** the object is at least in part a real object or at least in part a virtual object.

17. Creation device according to one of the claims 13 to 16, **characterized in that** the image viewpoints belong to a set of predetermined points.

Fig. 1

EP 2 111 605 B1

Fig. 2

Fig. 3

Fig. 4

EP 2 111 605 B1

Fig. 5

Caméra (réelle ou virtuelle) ou appareil photo

Zone de prise de vues

Position contrainte de l'utilisateur pour une initialisation automatique

Angle vertical et horizontal

Point référence dans le moteur

θ

φ

EP 2 111 605 B1

Fig. 6

Modèles Virtuels

Estimation manuelles

N images clés

Mode Initialisation Automatique

Mode poursuite

Fig. 7

EP 2 111 605 B1

EP 2 111 605 B1

800

Apprentissage du
paysage

Poursuite
de l'objet

Mti sensor

N images clés pour
des valeurs
d'orientation

Suivi dans
le paysage

Orientation de la caméra

805

Fig. 8

Fig. 9

Fig. 10

EP 2 111 605 B1

Capteur Mti

images clés
(yaw, pitch)

1100

initialisation

accrochage

Tentatives de
réinitialisation

1110

1105

régime permanent
de suivi

décrochage

Mode décroché
MTi

Yaw et pitch par
application de suivi

Yaw et pitch par MTi

Fig. 11

EP 2 111 605 B1